# EUROPEAN PATENT SPECIFICATION

(11) **EP 3 816 109 B1**
(45) Date of publication and mention of the grant of the patent: **29.11.2023**
(21) Application number: 20201586.3
(22) Date of filing: 13.10.2020
(51) Int. Cl.: C01G 3/02, C01G 9/02, C01G 51/04, C01G 53/04, C22B 15/00, C22B 3/00

(54) **METHOD FOR TREATING METAL-CONTAINING SOLUTION**
VERFAHREN ZUR BEHANDLUNG EINER METALLHALTIGEN LÖSUNG
PROCÉDÉ DE TRAITEMENT D'UNE SOLUTION CONTENANT DU MÉTAL

(30) Priority: 28.10.2019 CN 201911032522; 28.10.2019 CN 201911031447; 28.10.2019 CN 201911032510; 28.10.2019 CN 201911031448
(43) Date of publication of application: 05.05.2021
(73) Proprietor: China Enfi Engineering Corporation, Beijing 100038 (CN)
(72) Inventor: LI, Jun, Beijing, 100038 (CN); YIN, Shuyan, Beijing, 100038 (CN); WANG, Kuiting, Beijing, 100038 (CN); SUN, Ninglei, Beijing, 100038 (CN); LIU, Guo, Beijing, 100038 (CN); PENG, Jianhua, Beijing, 100038 (CN); DAI, Jianghong, Beijing, 100038 (CN); FU, Jianguo, Beijing, 100038 (CN); LU, Yeda, Beijing, 100038 (CN)
(74) Representative: Pfenning, Meinig & Partner mbB

(56) References cited:
- EP-A1- 1 412 546
- WO-A1-2009/127053
- CN-A- 103 993 175
- CN-A- 107 400 788
- US-A1- 2009 022 639
- US-B2- 6 383 460

## Description

### FIELD

The present disclosure relates to the field of hydrometallurgy technology, and more particularly to a method for treating a metal-containing solution.

### BACKGROUND

The existing methods for treating a metal-containing solution, especially for treating a solution containing nickel, cobalt, zinc or copper, have various problems, which needs to be further improved.

CN103993175A relates to a method for treating a nickel cobalt sulfate solution, which includes: adding lime milk to the nickel cobalt sulfate solution to carry out nickel and cobalt precipitation treatment to obtain a mixed slurry containing nickel and cobalt hydroxide precipitation and gypsum; performing cyclone separation on the mixed slurry to obtain a nickel cobalt hydroxide slurry and a gypsum slurry; acid washing and filtering the gypsum slurry to obtain the gypsum and a first filtrate; subjecting the nickel cobalt hydroxide slurry to a thickening separation to obtain an underflow slurry and an overflow slurry; and washing and filtering the underflow slurry to obtain the nickel cobalt hydroxide filter cake and a second filtrate.

CN107400788A relates to a method for precipitating nickel and cobalt in wet-smelting laterite nickel ore, which includes: acid leaching the laterite nickel ore to obtain a nickel-cobalt-containing leach solution; subjecting the nickel-cobalt-containing leach solution to a precipitation reaction to obtain a nickel cobalt precipitation solution; subjecting the nickel cobalt precipitation solution to a thickening separation to obtain a nickel-cobalt-containing underflow; and subjecting a part of the nickel-cobalt-containing underflow to a calcium nickel separation to obtain nickel cobalt hydroxide.

EP 1412546A1 relates to a method for removal of metals from their aqueous solution with lime precipitation, in which the precipitation is made in at least two neutralization stage. The method is particularly suitable for neutralization of the aqueous solution from the pickling of refined steel.

US 6383460B2 relates to a process for the recovery of nickel and/or cobalt from a concentrate, which includes subjecting the concentrate to a leaching stage with an ammonium solution to

produce a leach solution containing nickel and/or cobalt values and a residue; and controlling the concentrate of nickel in the leach solution to a maximum value of about 3 to 25 g/L.

### SUMMARY

According to an aspect of embodiments of the present disclosure, a method for treating a metal-containing solution is provided, metal is selected from nickel, cobalt, zinc or copper, and the metal-containing solution includes a metal sulfate. The method includes: (1) mixing the metal-containing solution with lime cream to obtain a liquid-solid mixture; (2) performing a thickening treatment on the liquid-solid mixture to obtain an overflow containing a metal hydroxide precipitate and an underflow containing calcium sulfate; and (3) filtering the overflow containing the metal hydroxide precipitate to obtain the metal hydroxide and a filtrate.

With the method for treating a metal-containing solution according to embodiments of the present disclosure, by mixing the metal-containing solution with the lime cream, the metal sulfate in the metal-containing solution reacts with the calcium hydroxide in the lime cream to generate calcium sulfate and metal hydroxide, both of which are solid precipitates, and the lime cream, as the precipitant, is low in price and will not affect the operation of subsequent processes. Though the calcium sulfate precipitate and the metal hydroxide precipitate both have very small particle sizes, the calcium sulfate exists in the form of crystals, while the metal hydroxide exists in a flocculation state, such that a settling velocity of the calcium sulfate is greater than that of the metal hydroxide, and thus by subjecting the liquid-solid mixture containing the calcium sulfate precipitate and the metal hydroxide precipitate to the thickening treatment, it is possible to separate the metal hydroxide precipitate from the calcium sulfate precipitate, without additional flocculants, which further reduces the cost of producing the metal hydroxide. Therefore, by using the lime produce a leach solution containing nickel and/or cobalt values and a residue; and controlling the concentrate of nickel in the leach solution to a maximum value of about 3 to 25 g/L.

### SUMMARY

According to an aspect of embodiments of the present disclosure, a method for treating a metal-containing solution is provided, metal is selected from nickel, cobalt, zinc or copper, and the metal-containing solution includes a metal sulfate. The method includes: (1) mixing the metal-containing solution with lime cream to obtain a liquid-solid mixture; (2) performing a thickening treatment on the liquid-solid mixture to obtain an overflow containing a metal hydroxide precipitate and an underflow containing calcium sulfate; and (3) filtering the overflow containing the metal hydroxide precipitate to obtain the metal hydroxide and a filtrate. In the method, a molar ratio of the metal in the metal-containing solution to calcium oxide in the lime cream is in a range of 0.8:1 to 1.2:1. In the metal hydroxide obtained in step (3), a content of the metal is not less than 35 wt%, and a content of calcium is not more than 6 wt%.

With the method for treating a metal-containing solution according to embodiments of the present disclosure, by mixing the metal-containing solution with the lime cream, the metal sulfate in the metal-containing solution reacts with the calcium hydroxide in the lime cream to generate calcium sulfate and metal hydroxide, both of which are solid precipitates, and the lime cream, as the precipitant, is low in price and will not affect the operation of subsequent processes. Though the calcium sulfate precipitate and the metal hydroxide precipitate both have very small particle sizes, the calcium sulfate exists in the form of crystals, while the metal hydroxide exists in a flocculation state, such that a settling velocity of the calcium sulfate is greater than that of the metal hydroxide, and thus by subjecting the liquid-solid mixture containing the calcium sulfate precipitate and the metal hydroxide precipitate to the thickening treatment, it is possible to separate the metal hydroxide precipitate from the calcium sulfate precipitate, without additional flocculants, which further reduces the cost of producing the metal hydroxide. Therefore, by using the lime cream as the precipitant, the method according to embodiments of the present disclosure is simpler, and the costs for production of per ton of metal can be saved by more than 2,000 Yuan as compared with the existing technologies. At the same time, a direct yield of the metal reaches 96%, and the method can be used in large-scale production and is suitable for industrial application.

In addition, the method for treating the metal-containing solution according to the above embodiments of the present disclosure further includes the following additional features.

In some embodiments of the present disclosure, the metal-containing solution is obtained by leaching a metal-containing material with sulfuric acid.

In some embodiments of the present disclosure, a content of the metal in the metal-containing solution is in a range of 1 to 20 g/L, and a content of calcium oxide in the lime cream is in a range of 10 to 40 g/L.

In some embodiments of the present disclosure, the thickening treatment includes a multi-stage thickening treatment.

In some embodiments of the present disclosure, performing a thickening treatment on the liquid-solid mixture includes: (2-1) performing a primary thickening treatment on the liquid-solid mixture to obtain a first underflow and a first overflow containing the metal hydroxide precipitate; and (2-2) performing a secondary thickening treatment on the first underflow to obtain the underflow containing calcium sulfate and a second overflow containing the metal hydroxide precipitate, and the overflow containing the metal hydroxide precipitate includes the first overflow containing the metal hydroxide precipitate and the second overflow containing the metal hydroxide precipitate.

In some embodiments of the present disclosure, a content of the metal in the filtrate obtained in step (3) is not more than 5 ppm.

In some embodiments of the present disclosure, at least a part of the filtrate obtained in step (3) is returned to step (1).

In some embodiments of the present disclosure, the method for treating a metal-containing solution further includes: (4) pickling and filtering the underflow containing calcium sulfate to obtain a pickled solution and calcium sulfate.

In some embodiments of the present disclosure, the method for treating a metal-containing solution further includes: returning at least a part of the calcium sulfate obtained in step (4) to step (1).

In some embodiments of the present disclosure, in the calcium sulfate obtained in step (4), a content of calcium is not less than 25 wt%, and a content of the metal is not more than 0.05 wt%.

In some embodiments of the present disclosure, the metal is nickel, and correspondingly, the metal sulfate is nickel sulfate, and the metal hydroxide is nickel hydroxide.

In some embodiments of the present disclosure, the metal is cobalt, and correspondingly, the metal sulfate is cobalt sulfate, and the metal hydroxide is cobalt hydroxide.

In some embodiments of the present disclosure, the metal is copper, and correspondingly, the metal sulfate is copper sulfate, and the metal hydroxide is copper hydroxide.

In some embodiments of the present disclosure, the metal is zinc, and correspondingly, the metal sulfate is zinc sulfate, and the metal hydroxide is zinc hydroxide.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the drawings, in which:
Fig. 1 is a flow chart of a method for treating a metal-containing solution, according to an embodiment of the present disclosure;
Fig. 2 is a flow chart of a method for treating a metal-containing solution, according to another embodiment of the present disclosure;
Fig. 3 is a flow chart of a method for treating a metal-containing solution, according to still another embodiment of the present disclosure;
Fig. 4 is a flow chart of a method for treating a metal-containing solution, according to still another embodiment of the present disclosure;
Fig. 5 is a flow chart of a method for treating a metal-containing solution, according to still another embodiment of the present disclosure;
Fig. 6 is a flow chart of a method for treating a nickel-containing solution, according to an embodiment of the present disclosure;
Fig. 7 is a flow chart of a method for treating a nickel-containing solution, according to another embodiment of the present disclosure;
Fig. 8 is a flow chart of a method for treating a cobalt-containing solution, according to still another embodiment of the present disclosure;
Fig. 9 is a flow chart of a method for treating a cobalt-containing solution, according to still another embodiment of the present disclosure;
Fig. 10 is a flow chart of a method for treating a copper-containing solution, according to still another embodiment of the present disclosure;
Fig. 11 is a flow chart of a method for treating a copper-containing solution, according to an embodiment of the present disclosure;
Fig. 12 is a flow chart of a method for treating a zinc-containing solution, according to another embodiment of the present disclosure; and
Fig. 13 is a flow chart of a method for treating a zinc-containing solution, according to still another embodiment of the present disclosure.

### DETAILED DESCRIPTION

Embodiments of the present disclosure will be described in detail below, examples of which are illustrated in the drawings, in which the same or similar elements and elements having same or similar functions are denoted by like reference numerals throughout the descriptions. The embodiments described herein with reference to drawings are explanatory, and used to generally understand the present disclosure. The embodiments shall not be construed to limit the present disclosure.

The present disclosure provides in embodiments a method for treating a metal-containing solution, in which the metal-containing solution includes a metal sulfate.

In embodiments of the present disclosure, the metal is selected from nickel, cobalt, zinc or copper, and the corresponding metal sulfate is nickel sulfate, cobalt sulfate, zinc sulfate or copper sulfate. For example, when the metal is nickel, the metal sulfate correspondingly is nickel sulfate; when the metal is cobalt, the metal sulfate correspondingly is cobalt sulfate; when the metal is copper, the metal sulfate correspondingly is copper sulfate; when the metal is zinc, the metal sulfate correspondingly is zinc sulfate.

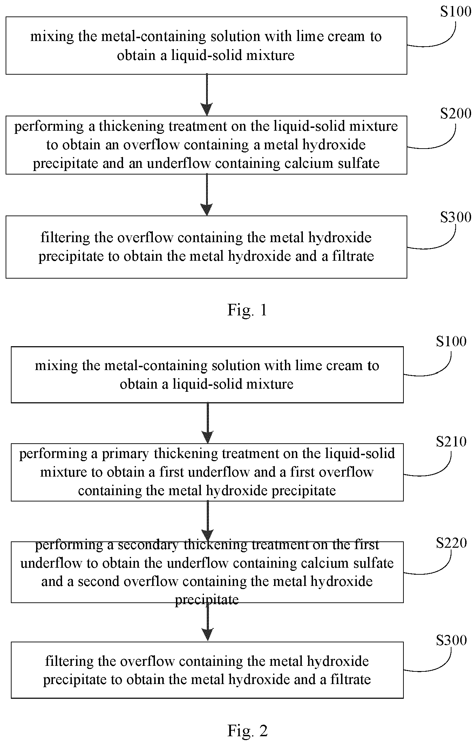

With reference to Fig. 1, the method includes the following steps.

In step S 100, the metal-containing solution is mixed with lime cream.

In this step, the metal-containing solution is mixed with the lime cream to obtain a liquid-solid mixture. The inventors have found that by mixing the metal-containing solution with the lime cream, the metal sulfate in the metal-containing solution reacts with the calcium hydroxide in the lime cream to generate calcium sulfate and metal hydroxide, both of which are solid precipitates, and the lime cream, used as the precipitant, is low in price and will not affect the operation of subsequent processes.

In some embodiments of the present disclosure, the source of the metal-containing solution is not particularly restricted, which may be chosen by those skilled in the art as required. For example, the metal-containing solution may be obtained by leaching a metal-containing material with sulfuric acid, e.g., by leaching a metal-containing mineral with sulfuric acid. Further, a content of the metal in the metal-containing solution and a content of calcium oxide in the lime cream are not particularly restricted. For example, the content of the metal in the metal-containing solution may be in a range of 1 to 20 g/L, e.g., 1 g/L, 5 g/L, 10 g/L, 15 g/L, or 20 g/L, and the content of calcium oxide in the lime cream may be in a range of 10 to 40 g/L, e.g., 10 g/L, 15 g/L, 20 g/L, 25 g/L, 30 g/L, 35 g/L, or 40 g/L. The inventors have found that if the metal content in the metal-containing solution is too low, the processing capacity of the equipment will be reduced and investment will increase, thereby making the method uneconomical. If the metal content in the metal-containing solution is too high, it is difficult to separate products, and the content of calcium in the metal hydroxide product will become higher, which is not convenient for the subsequent processing.

In some embodiments of the present disclosure, a mass ratio of the metal-containing solution to the lime cream is not particularly restricted, which may be chosen by those skilled in the art as required. For example, the mass ratio of the metal-containing solution to the lime cream may be determined based on the content of the metal in the metal-containing solution and the content of calcium oxide in the lime cream. Specifically, a molar ratio of the metal in the metal-containing solution to calcium oxide in the lime cream may be in a range of 0.8:1 to 1.2:1. The inventors have found that if the amount of the metal-containing solution is too much, the lime cream cannot precipitate all the metal in the metal-containing solution, such that the content of the metal in the underflow containing calcium sulfate is higher and the economics of the process is reduced; while if the amount of the lime cream is too much, a large amount of unreacted calcium oxide will exist in the product.

In step S200, a thickening treatment is performed on the liquid-solid mixture.

In this step, the liquid-solid mixture is subjected to the thickening treatment to obtain an overflow containing a metal hydroxide precipitate and an underflow containing calcium sulfate. The inventors have found that though the calcium sulfate precipitate and the metal hydroxide precipitate both have very small particle sizes, the calcium sulfate exists in the form of crystals, while the metal hydroxide exists in a flocculation state, such that a settling velocity of the calcium sulfate is greater than that of the metal hydroxide, and thus by subjecting the liquid-solid mixture containing the calcium sulfate precipitate and the metal hydroxide precipitate to the thickening treatment, it is possible to separate the metal hydroxide precipitate from the calcium sulfate precipitate, without additional flocculants, which further reduces the cost of producing the metal hydroxide. Specifically, the thickening treatment may be performed in a thickening machine. In the process of performing the thickening treatment on the liquid-solid mixture in the thickening machine, by adjusting flow rates of the underflow and overflow in the thickening machine, a rising speed of the water flow in the thickening machine may be adjusted, so as to achieve the purpose of separating the metal hydroxide from calcium sulfate. It should be noted that if the metal-containing product needs to be reprocessed subsequently, it is also possible not to separate the metal-containing product, but directly subject the liquid-solid mixture to leaching with sulfuric acid, followed by filtering, so as to obtain a high-concentration metal sulfate solution and gypsum slag, in which the high-concentration metal sulfate solution is used for the next step of treatment, and the gypsum slag is piled up. However, this method consumes a large amount of acid and needs large equipment investment, and thus is not discussed in depth here.

Further, the specific number of stages of the thickening treatment is not particularly restricted, which may be chosen by those skilled in the art as required. For example, it may be adjusted according to the acid consumption for pickling the underflow containing calcium sulfate and the direct yield of the metal. In addition, with the number of stages of the thickening treatment increases, the acid consumption subsequently needed for pickling the underflow containing calcium sulfate will decrease, and the direct yield of the metal will increase. According to an embodiment of the present disclosure, a multi-stage thickening treatment may be performed. Specifically, in an embodiment of the present disclosure, with reference to Fig. 2, a two-stage thickening treatment may be performed.

In step S210, a primary thickening treatment is performed on the liquid-solid mixture.

In this step, the primary thickening treatment is performed on the liquid-solid mixture to obtain a first underflow and a first overflow containing the metal hydroxide precipitate, in which the first underflow mainly includes calcium sulfate with a small amount of the metal hydroxide. In this way, the metal hydroxide and calcium sulfate in the liquid-solid mixture can be separated from each other preliminarily.

In step S220, a secondary thickening treatment is performed on the first underflow.

In this step, the secondary thickening treatment is performed on the first underflow to obtain the underflow containing calcium sulfate and a second overflow containing the metal hydroxide precipitate. The overflow containing the metal hydroxide precipitate includes the first overflow containing the metal hydroxide precipitate and the second overflow containing the metal hydroxide precipitate. Thus, the separation of the metal hydroxide from calcium sulfate can be further realized, thereby improving the direct yield of the metal.

In step S300, the overflow containing the metal hydroxide precipitate is filtered.

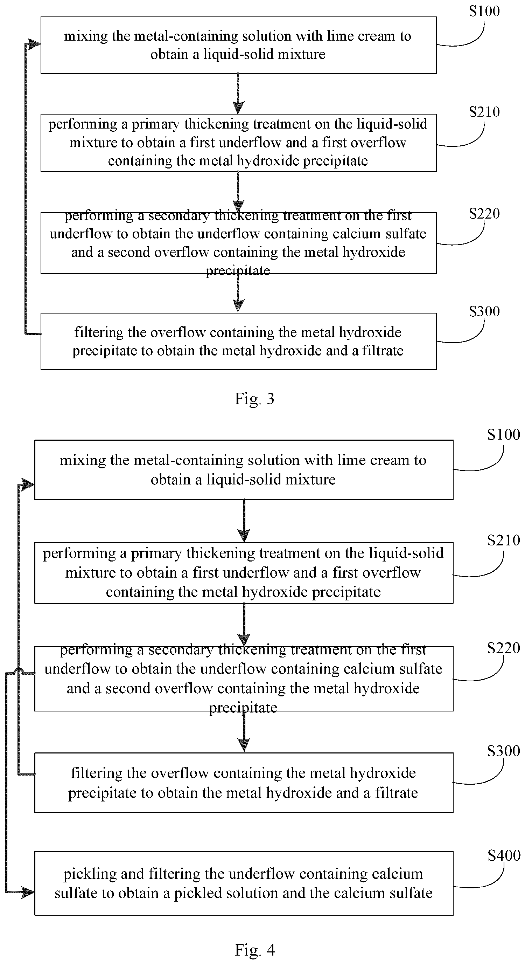

In this step, the overflow containing the metal hydroxide precipitate is filtered to obtain the metal hydroxide and a filtrate, thus realizing the collection of the metal. Further, referring to Fig. 3, at least a part of the filtrate may be returned to step S 100 for reuse. The inventors have found through extensive research that by adopting the above-mentioned treatment method of the present disclosure, the metal hydroxide obtained in step S300 has a content of the metal not less than 35 wt% and a content of calcium not more than 6 wt%, and a content of the metal in the filtrate is not more than 5 ppm. That is, using the method according to embodiments of the present disclosure, the direct yield of the metal is high, and the effect is remarkable.

With the method for treating a metal-containing solution according to embodiments of the present disclosure, by mixing the metal-containing solution with the lime cream, the metal sulfate in the metal-containing solution reacts with the calcium hydroxide in the lime cream to generate calcium sulfate and metal hydroxide, both of which are solid precipitates, and the lime cream, as the precipitant, is low in price and will not affect the operation of subsequent processes. Though the calcium sulfate precipitate and the metal hydroxide precipitate both have very small particle sizes, the calcium sulfate exists in the form of crystals, while the metal hydroxide exists in a flocculation state, such that a settling velocity of the calcium sulfate is greater than that of the metal hydroxide, and thus by subjecting the liquid-solid mixture containing the calcium sulfate precipitate and the metal hydroxide precipitate to the thickening treatment, it is possible to separate the metal hydroxide precipitate from the calcium sulfate precipitate, without additional flocculants, which further reduces the cost of producing the metal hydroxide. Therefore, by using the lime cream as the precipitant, the method according to embodiments of the present disclosure is simplified and the costs for production of per ton of metal can be saved by more than 2,000 Yuan as compared with the existing technologies. At the same time, a direct yield of the metal reaches 96%, and the method can be used in large-scale production and is suitable for industrial application.

According to some embodiments of the present disclosure, referring to Fig. 4, the above-mentioned method for treating a metal-containing solution further includes the following step.

In step S400, the underflow containing calcium sulfate is pickled.

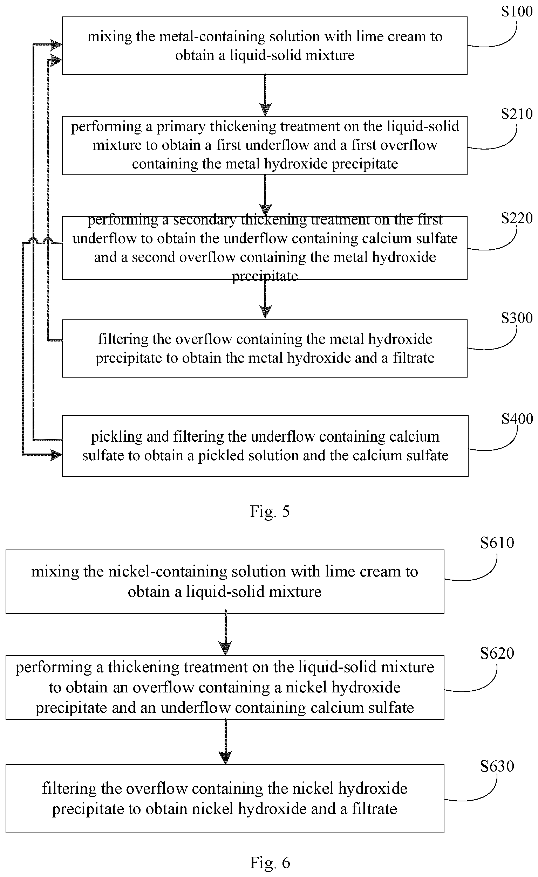

In this step, the underflow containing calcium sulfate is pickled and filtered to obtain a pickled solution and calcium sulfate. The inventors have found that by pickling the underflow containing calcium sulfate, impurities on the surface of calcium sulfate may be washed away. Further, referring to Fig. 5, at least a part of the calcium sulfate obtained in step S400 may returned to step S 100 as seed crystal, which promotes the reaction of the metal sulfate with calcium hydroxide in step S 100 and increase the settling velocity. The inventors have found through extensive research that in the calcium sulfate obtained after pickling, a content of calcium is not less than 25 wt%, and a content of the metal is not more than 0.05 wt%. That is, the yield of the metal achieved by method according to embodiments of the present disclosure is remarkably high. Further, the types of acid used for pickling are not particularly restricted, which may be chosen by those skilled in the art as required. For example, sulfuric acid may be used for pickling, such that no impurity will be brought to step S100 even though the obtained calcium sulfate is returned to step S 100 as seed crystal, which is conducive to the smooth progress of the reaction.

In some embodiments of the method for treating a metal-containing solution according to the present disclosure, the metal is nickel, and correspondingly, the metal sulfate is nickel sulfate, the obtained metal hydroxide is nickel hydroxide, and the method includes: S610, mixing the nickel-containing solution with lime cream to obtain a liquid-solid mixture; S620, performing a thickening treatment on the liquid-solid mixture to obtain an overflow containing a nickel hydroxide precipitate and an underflow containing calcium sulfate; and S630, filtering the overflow containing the nickel hydroxide precipitate to obtain nickel hydroxide and a filtrate, as shown in Fig. 6.

In the existing technology, a mainstream process for treating the low-grade nickel laterites from Indonesia and Philippines is to prepare nickel hydroxide after leaching nickel through hydrometallurgy technology. In the process of preparing nickel hydroxide, magnesium oxide or sodium hydroxide is commonly used as a precipitant, both of which have high price, and the accumulation of magnesium or sodium in long-term operation will affect the system, such that it is necessary to precipitate magnesium using lime or to remove sodium by evaporation, which results in a long process flow and high costs. Specifically, for example, as the precipitant, sodium hydroxide reacts with a nickel sulfate solution to prepare nickel hydroxide with addition of flocculants to improve the sedimentation of nickel hydroxide, followed by concentration and filtration to obtain the nickel hydroxide product. In this process, using sodium hydroxide as the precipitant for precipitating nickel will result in a high sodium content in the system, which will affect the system for long-term operation, so sodium needs to be removed by evaporation. Further, the price of the sodium hydroxide precipitant is high and flocculants needs to be added in the subsequent concentration process, thereby resulting in high operating costs. Other separation methods, such as cyclonic separation, due to the restriction of their separation principles and equipment structures, cannot be used for large-scale treatment, and thus their applications are limited. Therefore, the existing technology for treating the nickel-containing solution needs to be further improved.

However, with the method for treating a nickel-containing solution according to embodiments of the present disclosure, by mixing the nickel-containing solution with the lime cream, the nickel sulfate in the nickel-containing solution reacts with the calcium hydroxide in the lime cream to generate calcium sulfate and nickel hydroxide, both of which are solid precipitates, and the lime cream, as the precipitant, is low in price and will not affect the operation of subsequent processes. Though the calcium sulfate precipitate and the nickel hydroxide precipitate both have very small particle sizes, the calcium sulfate exists in the form of crystals, while the nickel hydroxide exists in a flocculation state, such that a settling velocity of the calcium sulfate is greater than that of the nickel hydroxide, and thus by subjecting the liquid-solid mixture containing the calcium sulfate precipitate and the nickel hydroxide precipitate to the thickening treatment, it is possible to separate the nickel hydroxide precipitate from the calcium sulfate precipitate, without additional flocculants, which further reduces the cost of producing the nickel hydroxide. Therefore, as compared with the existing technologies that further need to precipitate magnesium using lime or remove sodium by evaporating in the subsequent process, the method according to embodiments of the present disclosure is simplified by using the lime cream as the precipitant, and the costs for production of per ton of nickel can be saved by more than 2,000 Yuan. At the same time, a direct yield of nickel reaches 96%, and the method can be used in large-scale production and is suitable for industrial application.

In some embodiments of the present disclosure, the nickel-containing solution is obtained by leaching a nickel-containing material with sulfuric acid.

In some embodiments of the present disclosure, a content of nickel in the nickel-containing solution is in a range of 1 to 20 g/L, and a content of calcium oxide in the lime cream is in a range of 10 to 40 g/L.

In some embodiments of the present disclosure, a molar ratio of nickel in the nickel-containing solution to calcium oxide in the lime cream is in a range of 0.8: 1 to 1.2:1.

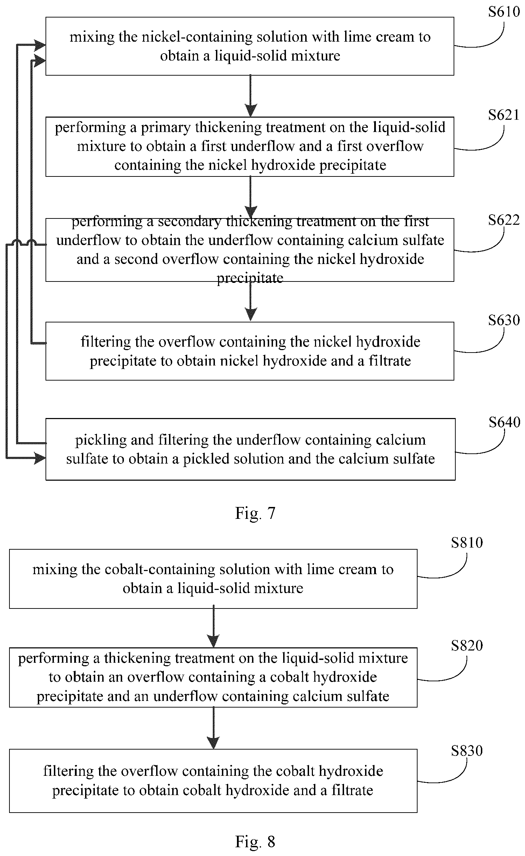

In some embodiments of the present disclosure, the thickening treatment includes a multi-stage thickening treatment. Optionally, performing a thickening treatment on the liquid-solid mixture includes: S621, performing a primary thickening treatment on the liquid-solid mixture to obtain a first underflow and a first overflow containing the nickel hydroxide precipitate; and S622, performing a secondary thickening treatment on the first underflow to obtain the underflow containing calcium sulfate and a second overflow containing the nickel hydroxide precipitate, as shown in Fig. 7.

In some embodiments of the present disclosure, the overflow containing the nickel hydroxide precipitate includes the first overflow containing the nickel hydroxide precipitate and the second overflow containing the nickel hydroxide precipitate.

In some embodiments of the present disclosure, in the nickel hydroxide obtained in step S630, a content of nickel is not less than 35 wt%, and a content of calcium is not more than 6 wt%; optionally, a content of nickel in the filtrate obtained in step S630 is not more than 5 ppm.

In some embodiments of the present disclosure, at least a part of the filtrate obtained in step S630 is returned to step S610, as shown in Fig. 7.

In some embodiments of the present disclosure, the method further includes: S640, pickling and filtering the underflow containing calcium sulfate to obtain a pickled solution and the calcium sulfate, as shown in Fig. 7.

In some embodiments of the present disclosure, the method further includes: returning at least a part of the calcium sulfate obtained in step S640 to step S610, as shown in Fig. 7.

In some embodiments of the present disclosure, in the calcium sulfate obtained in step S640, a content of calcium is not less than 25 wt%, and a content of nickel is not more than 0.05 wt%.

In some embodiments of the method for treating a metal-containing solution according to the present disclosure, the metal is cobalt, and correspondingly, the metal sulfate is cobalt sulfate, the obtained metal hydroxide is cobalt hydroxide, and the method includes: S810, mixing the cobalt-containing solution with lime cream to obtain a liquid-solid mixture; S820, performing a thickening treatment on the liquid-solid mixture to obtain an overflow containing a cobalt hydroxide precipitate and an underflow containing calcium sulfate; and S830, filtering the overflow containing the cobalt hydroxide precipitate to obtain cobalt hydroxide and a filtrate, as shown in Fig. 8.

In the existing technology, a mainstream process for treating the low-grade cobalt ore from Indonesia and Philippines is to prepare cobalt hydroxide after leaching cobalt through hydrometallurgy technology. In the process of preparing cobalt hydroxide, magnesium oxide or sodium hydroxide is commonly used as a precipitant, both of which have high price, and the accumulation of magnesium or sodium in long-term operation will affect the system, such that it is necessary to precipitate magnesium using lime or to remove sodium by evaporation, which results in a long process flow and high costs. Specifically, for example, as the precipitant, sodium hydroxide reacts with a cobalt sulfate solution to prepare cobalt hydroxide with addition of flocculants to improve the sedimentation of cobalt hydroxide, followed by concentration and filtration to obtain the cobalt hydroxide product. In this process, using sodium hydroxide as the precipitant for precipitating cobalt will result in a high sodium content in the system, which will affect the system for long-term operation, so sodium needs to be removed by evaporation. Further, the price of the sodium hydroxide precipitant is high and flocculants needs to be added in the subsequent concentration process, thereby resulting in high operating costs. Other separation methods, such as cyclonic separation, due to the restriction of their separation principles and equipment structures, cannot be used for large-scale treatment, and thus their applications are limited. Therefore, the existing technology for treating the cobalt-containing solution needs to be further improved.

However, with the method for treating a cobalt-containing solution according to embodiments of the present disclosure, by mixing the cobalt-containing solution with the lime cream, the cobalt sulfate in the cobalt-containing solution reacts with the calcium hydroxide in the lime cream to generate calcium sulfate and cobalt hydroxide, both of which are solid precipitates, and the lime cream, as the precipitant, is low in price and will not affect the operation of subsequent processes. Though the calcium sulfate precipitate and the cobalt hydroxide precipitate both have very small particle sizes, the calcium sulfate exists in the form of crystals, while the cobalt hydroxide exists in a flocculation state, such that a settling velocity of the calcium sulfate is greater than that of the cobalt hydroxide, and thus by subjecting the liquid-solid mixture containing the calcium sulfate precipitate and the cobalt hydroxide precipitate to the thickening treatment, it is possible to separate the cobalt hydroxide precipitate from the calcium sulfate precipitate, without additional flocculants, which further reduces the cost of producing the cobalt hydroxide. Therefore, as compared with the existing technologies that further need to precipitate magnesium using lime or remove sodium by evaporating in the subsequent process, the method according to embodiments of the present disclosure is simplified by using the lime cream as the precipitant, and the costs for production of per ton of cobalt can be saved by more than 2,000 Yuan. At the same time, a direct yield of cobalt reaches 96%, and the method can be used in large-scale production and is suitable for industrial application.

In some embodiments of the present disclosure, the cobalt-containing solution is obtained by leaching a cobalt-containing material with sulfuric acid.

In some embodiments of the present disclosure, a content of cobalt in the cobalt-containing solution is in a range of 1 to 20 g/L, and a content of calcium oxide in the lime cream is in a range of 10 to 40 g/L.

In some embodiments of the present disclosure, a molar ratio of cobalt in the cobalt-containing solution to calcium oxide in the lime cream is in a range of 0.8: 1 to 1.2:1.

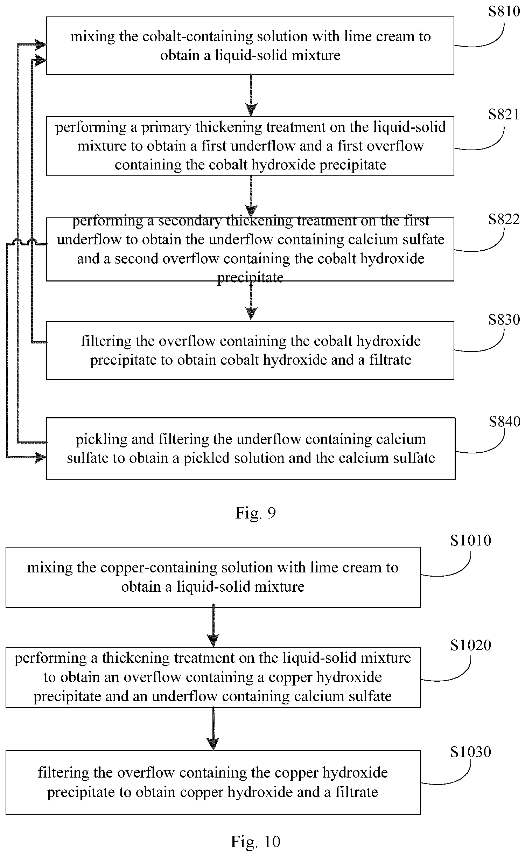

In some embodiments of the present disclosure, the thickening treatment includes a multi-stage thickening treatment. Optionally, performing a thickening treatment on the liquid-solid mixture includes: S821, performing a primary thickening treatment on the liquid-solid mixture to obtain a first underflow and a first overflow containing the cobalt hydroxide precipitate; and S822, performing a secondary thickening treatment on the first underflow to obtain the underflow containing calcium sulfate and a second overflow containing the cobalt hydroxide precipitate, as shown in Fig. 9.

In some embodiments of the present disclosure, the overflow containing the cobalt hydroxide precipitate includes the first overflow containing the cobalt hydroxide precipitate and the second overflow containing the cobalt hydroxide precipitate.

In some embodiments of the present disclosure, in the cobalt hydroxide obtained in step S830, a content of cobalt is not less than 35 wt%, and a content of calcium is not more than 6 wt%; optionally, a content of cobalt in the filtrate obtained in step S830 is not more than 5 ppm.

In some embodiments of the present disclosure, at least a part of the filtrate obtained in step S830 is returned to step S810, as shown in Fig. 9.

In some embodiments of the present disclosure, the method further includes: S840 pickling and filtering the underflow containing calcium sulfate to obtain a pickled solution and the calcium sulfate, as shown in Fig. 9.

In some embodiments of the present disclosure, the method further includes: returning at least a part of the calcium sulfate obtained in step S840 to step S810, as shown in Fig. 9.

In some embodiments of the present disclosure, in the calcium sulfate obtained in step S840, a content of calcium is not less than 25 wt%, and a content of cobalt is not more than 0.05 wt%.

In some embodiments of the method for treating a metal-containing solution according to the present disclosure, the metal is copper, and correspondingly, the metal sulfate is copper sulfate, the obtained metal hydroxide is copper hydroxide, and the method includes: S1010, mixing the copper-containing solution with lime cream to obtain a liquid-solid mixture; S1020, performing a thickening treatment on the liquid-solid mixture to obtain an overflow containing a copper hydroxide precipitate and an underflow containing calcium sulfate; and S1030, filtering the overflow containing the copper hydroxide precipitate to obtain copper hydroxide and a filtrate, as shown in Fig. 10.

At present, a large amount of copper-containing solution will be produced in some industrial fields. For example, in the hydrometallurgy process, a solution containing copper sulfate will be generated by leaching copper-containing materials (such as copper ore) with sulfuric acid. A traditional method for treating the copper-containing solution is to subject the solution containing copper sulfate to heating, evaporation, concentration and crystallization to obtain copper sulfate crystal. However, this method has high costs, low efficiency and high energy consumption, and the purity of the obtained copper sulfate crystal is low. Therefore, the existing technology for treating the copper-containing solution needs to be further improved.

However, with the method for treating a copper-containing solution according to embodiments of the present disclosure, by mixing the copper-containing solution with the lime cream, the copper sulfate in the copper-containing solution reacts with the calcium hydroxide in the lime cream to generate calcium sulfate and copper hydroxide, both of which are solid precipitates, and the lime cream, as the precipitant, is low in price. Though the calcium sulfate precipitate and the copper hydroxide precipitate both have very small particle sizes, the calcium sulfate exists in the form of crystals, while the copper hydroxide exists in a flocculation state, such that a settling velocity of the calcium sulfate is greater than that of the copper hydroxide, and thus by subjecting the liquid-solid mixture containing the calcium sulfate precipitate and the copper hydroxide precipitate to the thickening treatment, it is possible to separate the copper hydroxide precipitate from the calcium sulfate precipitate, which further reduces the cost of producing the copper hydroxide. Therefore, by directly using the lime cream as the precipitant, the costs for production of per ton of copper can be saved by more than 2,000 Yuan as compared with the existing technologies, a direct yield of copper reaches 96%, and the method is suitable for industrial application.

In some embodiments of the present disclosure, the copper-containing solution is obtained by leaching a copper-containing material with sulfuric acid.

In some embodiments of the present disclosure, a content of copper in the copper-containing solution is in a range of 1 to 20 g/L, and a content of calcium oxide in the lime cream is in a range of 10 to 40 g/L.

In some embodiments of the present disclosure, a molar ratio of copper in the copper-containing solution to calcium oxide in the lime cream is in a range of 0.8:1 to 1.2:1.

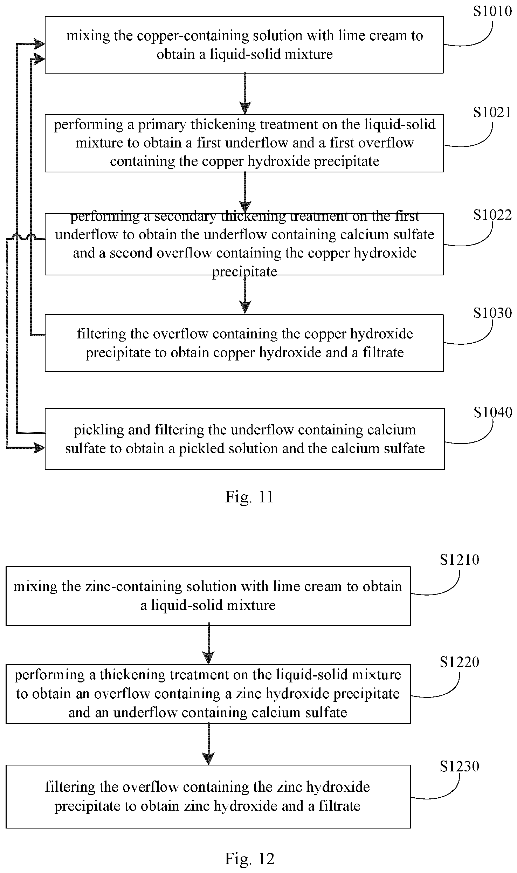

In some embodiments of the present disclosure, the thickening treatment includes a multi-stage thickening treatment; optionally, performing a thickening treatment on the liquid-solid mixture includes: S1021, performing a primary thickening treatment on the liquid-solid mixture to obtain a first underflow and a first overflow containing the copper hydroxide precipitate; and S1022, performing a secondary thickening treatment on the first underflow to obtain the underflow containing calcium sulfate and a second overflow containing the copper hydroxide precipitate, as shown in Fig. 11.

In some embodiments of the present disclosure, the overflow containing the copper hydroxide precipitate includes the first overflow containing the copper hydroxide precipitate and the second overflow containing the copper hydroxide precipitate.

In some embodiments of the present disclosure, in the copper hydroxide obtained in step S1030, a content of copper is not less than 35 wt%, and a content of calcium is not more than 6 wt%; optionally, a content of copper in the filtrate obtained in step S1030 is not more than 5 ppm.

In some embodiments of the present disclosure, at least a part of the filtrate obtained in step S1030 is returned to step S1010, as shown in Fig. 11.

In some embodiments of the present disclosure, the method further includes: S1040 pickling and filtering the underflow containing calcium sulfate to obtain a pickled solution and the calcium sulfate, as shown in Fig. 11.

In some embodiments of the present disclosure, the method further includes: returning at least a part of the calcium sulfate obtained in step S1040 to step S1010, as shown in Fig. 11.

In some embodiments of the present disclosure, in the calcium sulfate obtained in step S1040, a content of calcium is not less than 25 wt%, and a content of copper is not more than 0.05 wt%.

In some embodiments of the method for treating a metal-containing solution according to the present disclosure, the metal is zinc, and correspondingly, the metal sulfate is zinc sulfate, the obtained metal hydroxide is zinc hydroxide, and the method includes: S1210, mixing the zinc-containing solution with lime cream to obtain a liquid-solid mixture; S1220, performing a thickening treatment on the liquid-solid mixture to obtain an overflow containing a zinc hydroxide precipitate and an underflow containing calcium sulfate; and S1230, filtering the overflow containing the zinc hydroxide precipitate to obtain zinc hydroxide and a filtrate, as shown in Fig. 12.

At present, a large amount of zinc-containing solution will be produced in some industrial fields. For example, in the hydrometallurgy process, a solution containing zinc sulfate will be generated by leaching zinc-containing materials (such as zinc ore) with sulfuric acid. A traditional method for treating the zinc-containing solution is to react with chemicals such as sodium hydroxide, sodium carbonate or vulcanizing agents to produce hydroxides or sulfides. However, the agents used in this method are expensive or toxic. Specifically, using sodium hydroxide as the precipitant for precipitating zinc will result in a high sodium content in the system, which will affect the system for long-term operation, so sodium needs to be removed by evaporation, and the sodium hydroxide precipitant is expensive. Though using the vulcanizing agent as the precipitant can obtain high-quality products, the working environment is poor, toxic, and unsafe. Therefore, the existing technology for treating the zinc-containing solution needs to be further improved.

However, with the method for treating a zinc-containing solution according to embodiments of the present disclosure, by mixing the zinc-containing solution with the lime cream, the zinc sulfate in the zinc-containing solution reacts with the calcium hydroxide in the lime cream to generate calcium sulfate and zinc hydroxide, both of which are solid precipitates, and the lime cream, as the precipitant, is low in price. Though the calcium sulfate precipitate and the zinc hydroxide precipitate both have very small particle sizes, the calcium sulfate exists in the form of crystals, while the zinc hydroxide exists in a flocculation state, such that a settling velocity of the calcium sulfate is greater than that of the zinc hydroxide, and thus by subjecting the liquid-solid mixture containing the calcium sulfate precipitate and the zinc hydroxide precipitate to the thickening treatment, it is possible to separate the zinc hydroxide precipitate from the calcium sulfate precipitate, which further reduces the cost of producing the zinc hydroxide. Therefore, by directly using the non-toxic lime cream as the precipitant, the costs for production of per ton of zinc can be saved by more than 2,000 Yuan as compared with the existing technologies, a direct yield of zinc reaches 96%, and the method is suitable for industrial application.

In some embodiments of the present disclosure, the zinc-containing solution is obtained by leaching a zinc-containing material with sulfuric acid.

In some embodiments of the present disclosure, a content of zinc in the zinc-containing solution is in a range of 1 to 20 g/L, and a content of calcium oxide in the lime cream is in a range of 10 to 40 g/L.

In some embodiments of the present disclosure, a molar ratio of zinc in the zinc-containing solution to calcium oxide in the lime cream is in a range of 0.8:1 to 1.2:1.

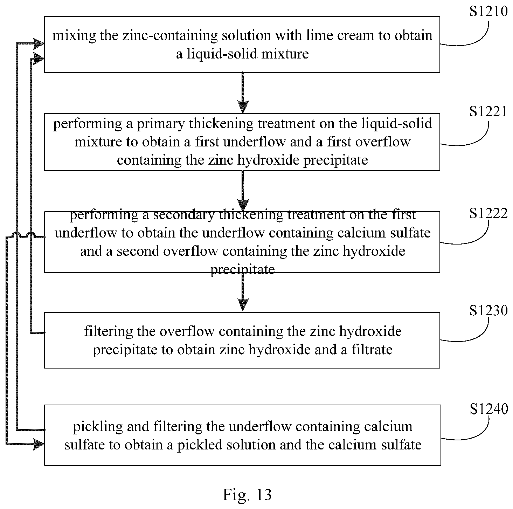

In some embodiments of the present disclosure, the thickening treatment includes a multi-stage thickening treatment; optionally, performing a thickening treatment on the liquid-solid mixture includes: S1221, performing a primary thickening treatment on the liquid-solid mixture to obtain a first underflow and a first overflow containing the zinc hydroxide precipitate; and S1222, performing a secondary thickening treatment on the first underflow to obtain the underflow containing calcium sulfate and a second overflow containing the zinc hydroxide precipitate, as shown in Fig. 13.

In some embodiments of the present disclosure, the overflow containing the zinc hydroxide precipitate includes the first overflow containing the zinc hydroxide precipitate and the second overflow containing the zinc hydroxide precipitate.

In some embodiments of the present disclosure, in the zinc hydroxide obtained in step S1230, a content of zinc is not less than 35 wt%, and a content of calcium is not more than 6 wt%; optionally, a content of zinc in the filtrate obtained in step S1230 is not more than 5 ppm.

In some embodiments of the present disclosure, at least a part of the filtrate obtained in step S1230 is returned to step S1210.

In some embodiments of the present disclosure, the method further includes: S1240, pickling and filtering the underflow containing calcium sulfate to obtain a pickled solution and the calcium sulfate, as shown in Fig. 13.

In some embodiments of the present disclosure, the method further includes: returning at least a part of the calcium sulfate obtained in step S1240 to step S1210, as shown in Fig. 13.

In some embodiments of the present disclosure, in the calcium sulfate obtained in step S1240, a content of calcium is not less than 25 wt%, and a content of zinc is not more than 0.05 wt%.

It should be noted that the steps described in the present disclosure do not require an absolute temporal relationship.

The present disclosure will be further described below with reference to specific examples. It should be noted that these examples are explanatory only and shall not be construed to limit the present disclosure in any way.

### Example 1

A nickel-containing solution obtained by leaching a nickel-containing mineral with sulfuric acid and having a nickel content of 10 g/L was mixed with lime cream having a calcium oxide content of 40 g/L in a molar ratio of nickel in the nickel-containing solution to calcium oxide in the lime cream of 1:1, to obtain a liquid-solid mixture. The liquid-solid mixture was subjected to a primary thickening treatment to obtain a first underflow and a first overflow containing a nickel hydroxide precipitate, and the first underflow was subjected to a secondary thickening treatment to obtain a underflow containing calcium sulfate and a second overflow containing the nickel hydroxide precipitate. The first and second overflows containing the nickel hydroxide precipitate were filtered to obtain the nickel hydroxide with a nickel content of 35.5 wt% and a calcium content of 5.6 wt% and a filtrate with a nickel content of 5 ppm. The underflow containing calcium sulfate was pickled and filtered to obtain a pickled solution and calcium sulfate with a calcium content of 25.6 wt% and a nickel content of 0.04 wt%. Compared with the existing nickel extraction technology using sodium hydroxide, the costs for production of per ton of nickel are saved by more than 2,000 Yuan using the method of the present disclosure, and the direct yield of nickel reaches 96.02%.

### Example 2

A nickel-containing solution obtained by leaching a nickel-containing mineral with sulfuric acid and having a nickel content of 5 g/L was mixed with lime cream having a calcium oxide content of 20 g/L in a molar ratio of nickel in the nickel-containing solution to calcium oxide in the lime cream of 1.2:1, to obtain a liquid-solid mixture. The liquid-solid mixture was subjected to a primary thickening treatment to obtain a first underflow and a first overflow containing a nickel hydroxide precipitate, and the first underflow was subjected to a secondary thickening treatment to obtain a underflow containing calcium sulfate and a second overflow containing the nickel hydroxide precipitate. The first and second overflows containing the nickel hydroxide precipitate were filtered to obtain the nickel hydroxide with a nickel content of 36 wt% and a calcium content of 5.9 wt% and a filtrate with a nickel content of 5 ppm. The underflow containing calcium sulfate was pickled and filtered to obtain a pickled solution and calcium sulfate with a calcium content of 27 wt% and a nickel content of 0.05 wt%. Compared with the existing nickel extraction technology using sodium hydroxide, the costs for production of per ton of nickel are saved by more than 2,000 Yuan using the method of the present disclosure, and the direct yield of nickel reaches 95.98%.

### Example 3

A cobalt-containing solution obtained by leaching a cobalt-containing mineral with sulfuric acid and having a cobalt content of 10 g/L was mixed with lime cream having a calcium oxide content of 40 g/L in a molar ratio of cobalt in the cobalt-containing solution to calcium oxide in the lime cream of 1:1, to obtain a liquid-solid mixture. The liquid-solid mixture was subjected to a primary thickening treatment to obtain a first underflow and a first overflow containing a cobalt hydroxide precipitate, and the first underflow was subjected to a secondary thickening treatment to obtain a second containing calcium sulfate and a second overflow containing the cobalt hydroxide precipitate. The first and second overflows containing the cobalt hydroxide precipitate were filtered to obtain the cobalt hydroxide with a cobalt content of 35.8 wt% and a calcium content of 5.4 wt% and a filtrate with a cobalt content of 5 ppm. The underflow containing calcium sulfate was pickled and filtered to obtain a pickled solution and calcium sulfate with a calcium content of 26.2 wt% and a cobalt content of 0.044 wt%. Compared with the existing cobalt extraction technology using sodium hydroxide, the costs for production of per ton of cobalt are saved by more than 2,000 Yuan using the method of the present disclosure, and the direct yield of cobalt reaches 96.00%.

### Example 4

A cobalt-containing solution obtained by leaching a cobalt-containing mineral with sulfuric acid and having a cobalt content of 20 g/L was mixed with lime cream having a calcium oxide content of 10 g/L in a molar ratio of cobalt in the cobalt-containing solution to calcium oxide in the lime cream of 0.8:1, to obtain a liquid-solid mixture. The liquid-solid mixture was subjected to a primary thickening treatment to obtain a first underflow and a first overflow containing a cobalt hydroxide precipitate, and the first underflow was subjected to a secondary thickening treatment to obtain a underflow containing calcium sulfate and a second overflow containing the cobalt hydroxide precipitate. The first and second overflows containing the cobalt hydroxide precipitate were filtered to obtain the cobalt hydroxide with a cobalt content of 35.5 wt% and a calcium content of 5 wt% and a filtrate with a cobalt content of 5 ppm. The underflow containing calcium sulfate was pickled and filtered to obtain a pickled solution and calcium sulfate with a calcium content of 25.8 wt% and a cobalt content of 0.048 wt%. Compared with the existing cobalt extraction technology using sodium hydroxide, the costs for production of per ton of cobalt are saved by more than 2,000 Yuan using the method of the present disclosure, and the direct yield of cobalt reaches 95.87%.

### Example 5

A copper-containing solution obtained by leaching a copper-containing ore with sulfuric acid and having a copper content of 10 g/L was mixed with lime cream having a calcium oxide content of 40 g/L in a molar ratio of copper in the copper-containing solution to calcium oxide in the lime cream of 1:1, to obtain a liquid-solid mixture. The liquid-solid mixture was subjected to a primary thickening treatment to obtain a first underflow and a first overflow containing a copper hydroxide precipitate, and the first underflow was subjected to a secondary thickening treatment to obtain a underflow containing calcium sulfate and a second overflow containing the copper hydroxide precipitate. The first and second overflows containing the copper hydroxide precipitate were filtered to obtain the copper hydroxide with a copper content of 35.3 wt% and a calcium content of 6 wt% and a filtrate with a copper content of 5 ppm. The underflow containing calcium sulfate was pickled and filtered to obtain a pickled solution and calcium sulfate with a calcium content of 25.1 wt% and a copper content of 0.045 wt%. Compared with the existing copper extraction technology, the costs for production of per ton of copper are saved by more than 2,000 Yuan using the method of the present disclosure, and the direct yield of copper reaches 96.23%.

### Example 6

A copper-containing solution obtained by leaching a copper-containing ore with sulfuric acid and having a copper content of 5 g/L was mixed with lime cream having a calcium oxide content of 20 g/L in a molar ratio of copper in the copper-containing solution to calcium oxide in the lime cream of 1.2:1, to obtain a liquid-solid mixture. The liquid-solid mixture was subjected to a primary thickening treatment to obtain a first underflow and a first overflow containing a copper hydroxide precipitate, and the first underflow was subjected to a secondary thickening treatment to obtain a underflow containing calcium sulfate and a second overflow containing the copper hydroxide precipitate. The first and second overflows containing the copper hydroxide precipitate were filtered to obtain the copper hydroxide with a copper content of 35.9 wt% and a calcium content of 5.2 wt% and a filtrate with a copper content of 5 ppm. The underflow containing calcium sulfate was pickled and filtered to obtain a pickled solution and calcium sulfate with a calcium content of 26.1 wt% and a copper content of 0.041 wt%. Compared with the existing copper extraction technology, the costs for production of per ton of copper are saved by more than 2,000 Yuan using the method of the present disclosure, and the direct yield of copper reaches 96.01%.

### Example 7

A zinc-containing solution obtained by leaching a zinc-containing ore with sulfuric acid and having a zinc content of 10 g/L was mixed with lime cream having a calcium oxide content of 40 g/L in a molar ratio of zinc in the zinc-containing solution to calcium oxide in the lime cream of 1:1, to obtain a liquid-solid mixture. The liquid-solid mixture was subjected to a primary thickening treatment to obtain a first underflow and a first overflow containing a zinc hydroxide precipitate, and the first underflow was subjected to a secondary thickening treatment to obtain a underflow containing calcium sulfate and a second overflow containing the zinc hydroxide precipitate. The first and second overflows containing the zinc hydroxide precipitate were filtered to obtain the zinc hydroxide with a zinc content of 35 wt% and a calcium content of 6 wt% and a filtrate with a zinc content of 5 ppm. The underflow containing calcium sulfate was pickled and filtered to obtain a pickled solution and calcium sulfate with a calcium content of 25 wt% and a zinc content of 0.05 wt%. Compared with the existing zinc extraction technology using sodium hydroxide, the costs for production of per ton of zinc are saved by more than 2,000 Yuan using the method of the present disclosure, and the direct yield of zinc reaches 96%.

### Example 8

A zinc-containing solution obtained by leaching a zinc-containing ore with sulfuric acid and having a zinc content of 20 g/L was mixed with lime cream having a calcium oxide content of 10 g/L in a molar ratio of zinc in the zinc-containing solution to calcium oxide in the lime cream of 0.8:1, to obtain a liquid-solid mixture. The liquid-solid mixture was subjected to a primary thickening treatment to obtain a first underflow and a first overflow containing a zinc hydroxide precipitate, and the first underflow was subjected to a secondary thickening treatment to obtain a underflow containing calcium sulfate and a second overflow containing the zinc hydroxide precipitate. The first and second overflows containing the zinc hydroxide precipitate were filtered to obtain the zinc hydroxide with a zinc content of 35.2 wt% and a calcium content of 6 wt% and a filtrate with a zinc content of 5 ppm. The underflow containing calcium sulfate was pickled and filtered to obtain a pickled solution and calcium sulfate with a calcium content of 27 wt% and a zinc content of 0.039 wt%. Compared with the existing zinc extraction technology using sodium hydroxide, the costs for production of per ton of zinc are saved by more than 2,000 Yuan using the method of the present disclosure, and the direct yield of zinc reaches 96.5%.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples. In addition, in the absence of contradiction, those skilled in the art can combine different embodiments or examples described in this specification or combine the features thereof.

Although explanatory embodiments and examples have been shown and described, it would be appreciated by those skilled in the art that the above embodiments and examples cannot be construed to limit the present disclosure, and changes, alternatives, variants and modifications can be made in the embodiments without departing from the scope of the present disclosure.

## Claims

1. A method for treating a metal-containing solution, wherein the metal is selected from nickel, cobalt, zinc or copper, and the metal-containing solution comprises a metal sulfate, and wherein the method comprises:
(1) mixing the metal-containing solution with lime cream to obtain a liquid-solid mixture;
(2) performing a thickening treatment on the liquid-solid mixture to obtain an overflow containing a metal hydroxide precipitate and an underflow containing calcium sulfate; and
(3) filtering the overflow containing the metal hydroxide precipitate to obtain the metal hydroxide and a filtrate,
wherein a molar ratio of the metal in the metal-containing solution to calcium oxide in the lime cream is in a range of 0.8: 1 to 1.2:1, and
wherein in the metal hydroxide obtained in step (3), a content of the metal is not less than 35 wt%, and a content of calcium is not more than 6 wt%.

2. The method according to claim 1, wherein the metal-containing solution is obtained by leaching a metal-containing material with sulfuric acid.

3. The method according to claim 1 or 2, wherein a content of the metal in the metal-containing solution is in a range of 1 to 20 g/L, and a content of calcium oxide in the lime cream is in a range of 10 to 40 g/L.

4. The method according to any one of claims 1 to 3, wherein the thickening treatment comprises a multi-stage thickening treatment.

5. The method according to any one of claims 1 to 4, wherein performing a thickening treatment on the liquid-solid mixture comprises:
(2-1) performing a primary thickening treatment on the liquid-solid mixture to obtain a first underflow and a first overflow containing the metal hydroxide precipitate; and
(2-2) performing a secondary thickening treatment on the first underflow to obtain the underflow containing calcium sulfate and a second overflow containing the metal hydroxide precipitate,
wherein the overflow containing the metal hydroxide precipitate comprises the first overflow containing the metal hydroxide precipitate and the second overflow containing the metal hydroxide precipitate.

6. The method according to any one of claims 1 to 5, wherein a content of the metal in the filtrate obtained in step (3) is not more than 5 ppm.

7. The method according to any one of claims 1 to 6, wherein at least a part of the filtrate obtained in step (3) is returned to step (1).

8. The method according to any one of claims 1 to 7, further comprising:
(4) pickling and filtering the underflow containing calcium sulfate to obtain a pickled solution and the calcium sulfate.

9. The method according to claim 8, further comprising:
returning at least a part of the calcium sulfate obtained in step (4) to step (1).

10. The method according to claim 8, wherein in the calcium sulfate obtained in step (4), a content of calcium is not less than 25 wt%, and a content of the metal is not more than 0.05 wt%.

11. The method according to any one of claims 1 to 10, wherein the metal is nickel, and correspondingly, the metal sulfate is nickel sulfate, and the metal hydroxide is nickel hydroxide.

12. The method according to any one of claims 1 to 10, wherein the metal is cobalt, and correspondingly, the metal sulfate is cobalt sulfate, and the metal hydroxide is cobalt hydroxide.

13. The method according to any one of claims 1 to 10, wherein the metal is copper, and correspondingly, the metal sulfate is copper sulfate, and the metal hydroxide is copper hydroxide.

14. The method according to any one of claims 1 to 10, wherein the metal is zinc, and correspondingly, the metal sulfate is zinc sulfate, and the metal hydroxide is zinc hydroxide.

## Patentansprüche

1. Verfahren zum Behandeln einer metallhaltigen Lösung, wobei das Metall aus Nickel, Cobalt, Zink oder Kupfer ausgewählt ist und die metallhaltige Lösung ein Metallsulfat umfasst, und wobei das Verfahren umfasst:
(1) Mischen der metallhaltigen Lösung mit Kalkbrei, um ein Flüssigkeit-Feststoff-Gemisch zu erhalten;
(2) Durchführen einer Eindickungsbehandlung an dem Flüssigkeit-Feststoff-Gemisch, um einen Oberstrom, der ein Metallhydroxidpräzipitat enthält, und einen Unterstrom, der Calciumsulfat enthält, zu erhalten; und
(3) Filtern des Oberstroms, der das Metallhydroxidpräzipitat enthält, um das Metallhydroxid und ein Filtrat zu erhalten,
wobei ein Molverhältnis des Metalls in der metallhaltigen Lösung zu Calciumoxid in dem Kalkbrei in einem Bereich von 0,8:1 bis 1,2:1 liegt, und
wobei in dem in Schritt (3) erhaltenen Metallhydroxid ein Metallgehalt bei nicht unter 35 Gew.-% liegt und ein Calciumgehalt bei nicht über 6 Gew.-% liegt.

2. Verfahren nach Anspruch 1, wobei die metallhaltige Lösung durch Auslaugen eines metallhaltigen Materials mit Schwefelsäure erhalten wird.

3. Verfahren nach Anspruch 1 oder 2, wobei ein Metallgehalt in der metallhaltigen Lösung im Bereich von 1 bis 20 g/l liegt und ein Calciumoxidgehalt in dem Kalkbrei in einem Bereich von 10 bis 40 g/l liegt.

4. Verfahren nach einem der Ansprüche 1 bis 3, wobei die Eindickungsbehandlung eine mehrstufige Eindickungsbehandlung umfasst.

5. Verfahren nach einem der Ansprüche 1 bis 4, wobei die Durchführung einer Eindickungsbehandlung an dem Flüssigkeit-Feststoff-Gemisch umfasst:
(2-1.) Durchführen einer primären Eindickungsbehandlung an dem Flüssigkeit-Feststoff-Gemisch, um einen ersten Unterstrom und einen ersten Oberstrom, die das Metallhydroxidpräzipitat enthalten, zu erhalten; und
(2-2.) Durchführen einer sekundären Eindickungsbehandlung an dem ersten Unterstrom, um den Unterstrom, der Calciumsulfat enthält, und einen zweiten Oberstrom, der das Metallhydroxidpräzipitat enthält, zu erhalten,
wobei der das Metallhydroxidpräzipitat enthaltende Oberstrom den ersten Oberstrom, der das Metallhydroxidpräzipitat enthält, und den zweiten Oberstrom, der das Metallhydroxidpräzipitat enthält, einschließt.

6. Verfahren nach einem der Ansprüche 1 bis 5, wobei ein Metallgehalt in dem in Schritt (3) erhaltenen Filtrat nicht mehr als 5 ppm beträgt.

7. Verfahren nach einem der Ansprüche 1 bis 6, wobei zumindest ein Teil des in Schritt (3) erhaltenen Filtrats zu Schritt (1) zurückgeführt wird.

8. Verfahren nach einem der Ansprüche 1 bis 7, ferner umfassend:
(4) Beizen und Filtern des Unterstroms, der Calciumsulfat enthält, um eine gebeizte Lösung und das Calciumsulfat zu erhalten.

9. Verfahren nach Anspruch 8, ferner umfassend:
Zurückführen zumindest eines Teils des in Schritt (4) erhaltenen Calciumsulfats zu Schritt (1).

10. Verfahren nach Anspruch 8, wobei in dem in Schritt (4) erhaltenen Calciumsulfat ein Calciumgehalt bei nicht unter 25 Gew.-% und liegt ein Metallgehalt bei nicht über 0,05 Gew.-% liegt.

11. Verfahren nach einem der Ansprüche 1 bis 10, wobei das Metall Nickel ist und dementsprechend das Metallsulfat Nickelsulfat ist und das Metallhydroxid Nickelhydroxid ist.

12. Verfahren nach einem der Ansprüche 1 bis 10, wobei das Metall Cobalt ist und dementsprechend das Metallsulfat Cobaltsulfat ist und das Metallhydroxid Cobalthydroxid ist.

13. Verfahren nach einem der Ansprüche 1 bis 10, wobei das Metall Kupfer ist und dementsprechend das Metallsulfat Kupfersulfat ist und das Metallhydroxid Kupferhydroxid ist.

14. Verfahren nach einem der Ansprüche 1 bis 10, wobei das Metall Zink ist und dementsprechend das Metallsulfat Zinksulfat ist und das Metallhydroxid Zinkhydroxid ist.

## Revendications

1. Procédé de traitement d'une solution contenant un métal, dans lequel le métal est choisi parmi le nickel, le cobalt, le zinc ou le cuivre, et la solution contenant un métal comprend un sulfate métallique, et le procédé comprenant :
(1) le mélange de la solution contenant un métal avec du lait de chaux pour obtenir un mélange liquide-solide ;
(2) la conduite d'un traitement d'épaississement sur le mélange liquide-solide pour obtenir un débordement contenant un précipité d'hydroxyde métallique et un sous-écoulement contenant du sulfate de calcium ; et
(3) la filtration du débordement contenant le précipité d'hydroxyde métallique pour obtenir l'hydroxyde métallique et un filtrat,
dans lequel un rapport molaire du métal dans la solution contenant un métal à l'oxyde de calcium dans le lait de chaux est compris dans une plage de 0,8 :1 à 1,2:1, et
dans lequel, dans l'hydroxyde métallique obtenu dans l'étape (3), une teneur du métal n'est pas inférieure à 35 % en poids, et une teneur en calcium n'est pas supérieure à 6 % en poids.

2. Procédé selon la revendication 1, dans lequel la solution contenant un métal est obtenue par lixiviation d'un matériau contenant un métal avec de l'acide sulfurique.

3. Procédé selon la revendication 1 ou 2, dans lequel une teneur du métal dans la solution contenant un métal est dans une plage de 1 à 20 g/l, et une teneur en oxyde de calcium dans le lait de chaux est dans une plage de 10 à 40 g/l.

4. Procédé selon l'une quelconque des revendications 1 à 3, dans lequel le traitement d'épaississement comprend un traitement d'épaississement en plusieurs étapes.

5. Procédé selon l'une quelconque des revendications 1 à 4, dans lequel la conduite d'un traitement d'épaississement sur le mélange liquide-solide comprend :
(2-1.) la conduite d'un traitement d'épaississement primaire sur le mélange liquide-solide pour obtenir un premier sous-écoulement et un premier débordement contenant le précipité d'hydroxyde métallique ; et
(2-2.) la conduite d'un traitement d'épaississement secondaire sur le premier sous-écoulement pour obtenir le sous-écoulement contenant du sulfate de calcium et un deuxième débordement contenant le précipité d'hydroxyde métallique,
dans lequel le débordement contenant le précipité d'hydroxyde métallique comprend le premier débordement contenant le précipité d'hydroxyde métallique et le deuxième débordement contenant le précipité d'hydroxyde métallique.

6. Procédé selon l'une quelconque des revendications 1 à 5, dans lequel une teneur du métal dans le filtrat obtenu dans l'étape (3) n'est pas supérieure à 5 ppm.

7. Procédé selon l'une quelconque des revendications 1 à 6, dans lequel au moins une partie du filtrat obtenu dans l'étape (3) est recyclée à l'étape (1).

8. Procédé selon l'une quelconque des revendications 1 à 7, comprenant en outre :
(4) le décapage et la filtration du sous-écoulement contenant du sulfate de calcium pour obtenir une solution décapée et le sulfate de calcium.

9. Procédé selon la revendication 8, comprenant en outre :
le recyclage d'au moins une partie du sulfate de calcium obtenu dans l'étape (4) à l'étape (1).

10. Procédé selon la revendication 8, dans lequel, dans le sulfate de calcium obtenu dans l'étape (4), une teneur en calcium n'est pas inférieure à 25 % en poids, et une teneur du métal n'est pas supérieure à 0,05 % en poids.

11. Procédé selon l'une quelconque des revendications 1 à 10, dans lequel le métal est le nickel, et en correspondance, le sulfate métallique est le sulfate de nickel, et l'hydroxyde métallique est l'hydroxyde de nickel.

12. Procédé selon l'une quelconque des revendications 1 à 10, dans lequel le métal est le cobalt, et en correspondance, le sulfate métallique est le sulfate de cobalt, et l'hydroxyde métallique est l'hydroxyde de cobalt.

13. Procédé selon l'une quelconque des revendications 1 à 10, dans lequel le métal est le cuivre, et en correspondance, le sulfate métallique est le sulfate de cuivre, et l'hydroxyde métallique est l'hydroxyde de cuivre.

14. Procédé selon l'une quelconque des revendications 1 à 10, dans lequel le métal est le zinc et, en correspondance, le sulfate métallique est le sulfate de zinc, et l'hydroxyde métallique est l'hydroxyde de zinc.
